# EUROPEAN PATENT SPECIFICATION

(11) **EP 0 242 217 B1**
(45) Date of publication and mention of the grant of the patent: **07.07.1993**
(21) Application number: 87303365.8
(22) Date of filing: 15.04.1987
(51) Int. Cl.: G11B 7/24, G11B 13/04

(54) **Optically recordable carriers**
Optisch beschreibbare Träger
Supports enregistrables optiquement

(30) Priority: 16.04.1986 JP 88944/86
(43) Date of publication of application: 21.10.1987
(73) Proprietor: SONY CORPORATION, Tokyo 141 (JP)
(72) Inventor: Miyai, Seiichi c/o Patents Division, Shinagawa-ku Tokyo 141 (JP); Akamatsu, Junichi c/o Patents Division, Shinagawa-ku Tokyo 141 (JP)
(74) Representative: Thomas, Christopher Hugo

(56) References cited:
- EP-A- 0 139 474
- EP-A- 0 161 807
- DE-A- 3 623 285
- FR-A- 2 561 023
- GB-A- 2 165 264
- XEROX DISCLOSURE JOURNAL, vol. 8, no. 3, May/June 1983, pages 279-280, Stamford, Connecticut, US; R.M. FAY et al.: "Hermetically sealed optical plastic substrate"
- PATENT ABSTRACTS OF JAPAN, vol. 10, no. 48 (P-431)[2105], 25th February 1986;& JP-A-60 191 449

## Description

This invention relates to optically recordable carriers.

An optically recordable medium or carrier particularly suited for use in a magneto-optical recording system is known in which a thin film of an alloy of rare earth material and transition metal or the like is provided on a substrate. For example, amorphous films, such as GdCo, GdFe, TbFe, DyFe, GdTbFe, TbDyFe, have been proposed for use as optical record layers. In general, these known optically recordable carriers have poor corrosion resistance, so that they are easily corroded in a humid atmosphere, and their recording characteristics are deteriorated.

To prevent a metal layer on an optical disc from being corroded, it has been proposed in our US patent application serial no. 06/693 303, filed 23 January 1985, and which is a continuation application of serial no. 06/363 532 filed on 30 March 1982, now abandoned, to omit the metal optical record layer from an outer edge portion and/or an inner edge portion of a substrate and to provide a protective film of organic material which extends over the metal optical record layer to the outer edge portion and/or the inner edge portion of the substrate. It is intended that the protective film of organic material prevent the metal optical record layer from being exposed to the atmosphere and thus prevent corrosion of the optical record layer.

However, even when the metal optical record layer is excluded from the outer edge portion and/or the inner edge portion of the substrate and the metal optical record layer is covered with a protective film or organic material, the protective film of organic material cannot completely seal out water vapour and oxygen. There is still the risk that water vapour and oxygen in the atmosphere will diffuse through the protective film of organic material and reach the metal optical record layer. Thus, complete protection of the optical record layer from corrosion cannot be attained. Corrosion of the optical record layer is, of course, a particularly serious problem in the case of optically recordable carriers with are employed in magneto-optical recording and reproducing systems of the type in which recording, reproduction and erasure are carried out repeatedly.

According to the present invention there is provided an optically recordable carrier comprising:
a substrate, an optical record layer on said substrate, and a protective film of inorganic material enveloping surfaces of the optical record layer, the optical record layer and the substrate being of annular shape and the protective film of inorganic material including a first protective layer interposed between the substrate and the optical record layer and a second protective layer formed so as to cover an upper surface and inner and outer peripheral edge surfaces of the optical record layer and fused with the first protective layer, the second protective layer being covered on its outer surface with a protective film of organic material;
characterised in that
the first protective layer is also of annular shape and has an inner diameter larger than that of the substrate and an outer diameter smaller than that of the substrate;
the second protective layer is formed so as to extend over and fuse with inner and outer edge surfaces of the first protective layer in addition to covering the uppers surface and inner and outer peripheral edge surfaces of said optical record layer; and
the second protective layer is also of annular shape, has an inner diameter larger than that of the substrate and an outer diameter smaller than that of the substrate, and the protective film of organic material has inner and outer diameters the same as those of the substrate and covers the second protective layer on its upper surface and inner and outer peripheral surfaces.

The invention will now be described by way of example with reference to the accompanying drawings, throughout which like parts are referred to by like references, and in which:
Figure 1 is a perspective view of a first embodiment of optically recordable carrier according to the present invention;
Figure 2 is a diagrammatic cross-sectional view taken along a line II-II in Figure 1, and showing each layer with its thickness exaggerated;
Figures 3, 4 and 5 are diagrammatic cross-sectional views similar to that of Figure 2, but showing second, third and fourth embodiments respectively of the present invention; and
Figures 6 and 7 are diagrammatic cross-sectional views also similar to that of Figure 2, but showing respective optically recordable carriers to which reference will be made as comparative examples.

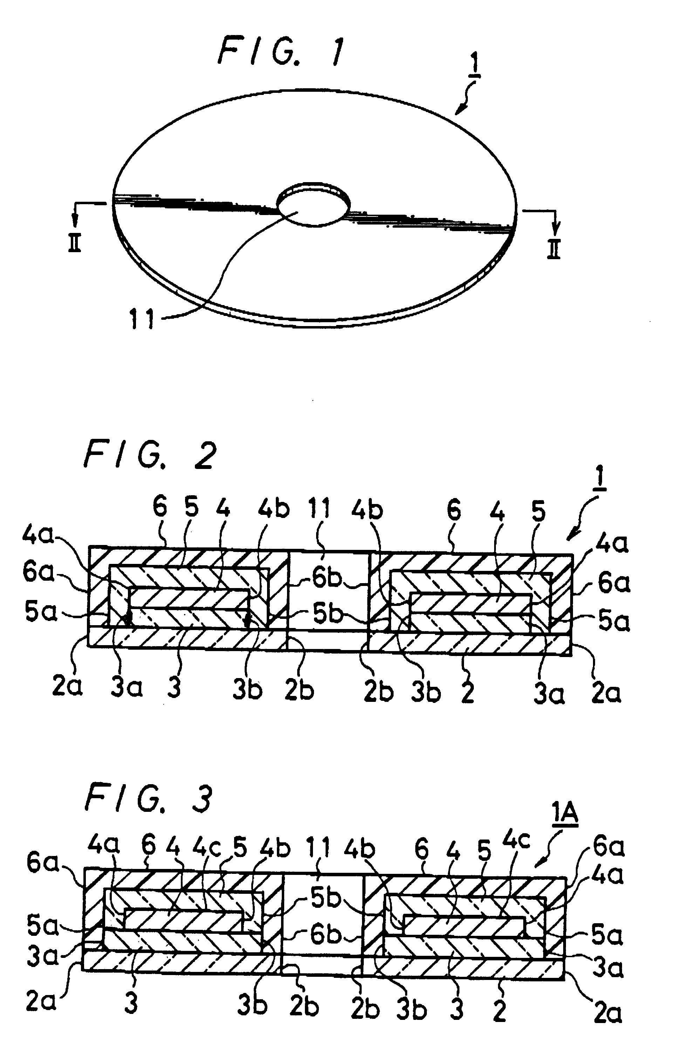

Referring to Figures 1 and 2, the first embodiment of optically recordable carrier 1 comprises an annular or ring-shaped substrate 2 with a central circular opening 11. The substrate 2 is made of glass, polycarbonate resin or other suitable material.

The substrate 2 has formed thereon a first protective film or layer 3 of inorganic material, such as silicon nitride or aluminium nitride. The first protective layer 3 is formed on the substrate 2 by sputtering or some other suitable process. The radial distance from the centre of the opening 11 to the outer peripheral edge 3a of the first protective layer 3 is smaller than the similar radial distance to the outer peripheral edge 2a of the substrate 2, and the radial distance from the centre of the opening 11 to the inner peripheral edge 3b of the protective layer 3 is longer than the similar radial distance to the inner peripheral edge 2b of the substrate 2.

An optical record layer 4 is formed on the first protective layer 3. The record layer 4 is a film or layer of an alloy already known for such purpose, for example, an alloy of rare earth metal and transition metal, and is grown on the first protective layer 3 by sputtering or some other suitable process. The record layer 4 is coextensive with the first protective layer 3, that is, the radial distances from the centre of the opening 11 to its outer and inner peripheral edges 4a and 4b are the same as the corresponding radial distances for the first protective layer 3, and hence the record layer 4 is precisely superimposed on the first protective layer 3.

A second protective layer 5 is of an inorganic material the same as that forming the first protective layer 3. The second protective layer 5 is a film or layer formed by sputtering or other suitable process so that it covers the upper surface of the record layer 4 and also the surfaces of the outer edges 3a and 4a of the layers 3 and 4, and the surfaces of the inner edges 3b and 4b of the layers 3 and 4. The radial distance from the centre of the opening 11 to the outer peripheral edge 5a of the second protective layer 5 is larger than the radial distance from the centre of the opening 11 to the outer edges 3a and 4a of the layers 3 and 4. Moreover, the radial distance from the centre of the opening 11 to the inner peripheral edge 5b of the second protective layer 5 is smaller than the radial distance from the centre of the opening 11 to the inner edges 3b and 4b of the layers 3 and 4. Furthermore, the outer diameter of the second protective layer 5 is selected to be smaller than the outer diameter of the substrate 2 and the inner diameter of the second protective layer 5 is larger than the inner diameter of the substrate 2.

It will be apparent that the first and second protective layers 3 and 5 are joined or fused at the outer and inner edges 3a and 3b of the first protective layer 3 so as to form a continuous film of inorganic material enveloping the record layer 4.

A protective film 6 of organic material covers the outside of the second protective layer 5. The protective film 6 is formed of a synthetic resin, for example, of ultraviolet ray hardening type, which is coated on the second protective layer 5 and then cured by irradiation with ultraviolet rays. The outer peripheral edge 6a and the inner peripheral edge 6b of the protective film 6 substantially coincides with the outer edge 2a and the inner edge 2b, respectively, of the substrate 2.

In the carrier 1, the record layer 4 is enveloped by the first and second protective layers 3 and 5 of inorganic material which perfectly protect the record layer 4 from water vapour and the oxygen in the atmosphere, thereby improving the resistance to corrosion of the record layer 4.

Referring now to Figure 3, in the second embodiment of optically recordable carrier 1A, the outer and inner diameters of the record layer 4 formed on the first protective layer 3 are smaller and longer respectively than the outer and inner diameters of the first protective layer 3. Accordingly, the outer and inner edges 4a and 4b of the record layer 4 are radially spaced from the outer and inner edges 3a and 3b of the first protective layer 3.

The second protective layer 5 has outer and inner diameters that are the same as those of the first protective layer 3 so that the protective layer 5 covers the upper surface 4c and the inner and outer edges 4b and 4a of the record layer 4. The lower edges of the second protective layer 5 near its inner and outer edges 5b and 5a are joined or fused to the upper surface of the first protective layer 3 near its inner and outer edges 3b and 3a, respectively, so as again to form a continuous film or inorganic material in which the record layer 4 is enveloped. Then, the protective film 6 of organic material is formed as described with reference to the first embodiment.

Our experiments have shown that the carrier 1A of Figure 3 is superior in corrosion resistance to the carrier 1 of Figure 2. The reason for this may be that, when the second protective layer 5 of inorganic material is formed by sputtering in the embodiment of Figure 2, it is difficult to provide different deposition rates at the peripheral edge portions and at the central portion, respectively, of the second protective layer 5. Therefore, even when a predetermined thickness of the protective layer 5, which corresponds to the thickness of the first protective layer 3 and to the thickness of the record layer 4, is deposited on the upper surface 4c of the record layer 4, that same thickness of the second protective layer 5 is not obtained at its portions around the inner and outer edges 4b and 4a of the record layer 4. As a result, in the carrier 1, the second protective layer 5 is too thin at its portions corresponding to the inner and outer edges 4b and 4a of the record layer 4. On the other hand, in the carrier 1A, the thickness of the second protective layer 5 at its portions confronting the inner and outer edges 4b and 4a of the record layer 4 need only be the sum of the thickness of the record layer 4 and of the protective layer 5, so that a sufficient thickness of the protective layer 5 can be obtained at such portions.

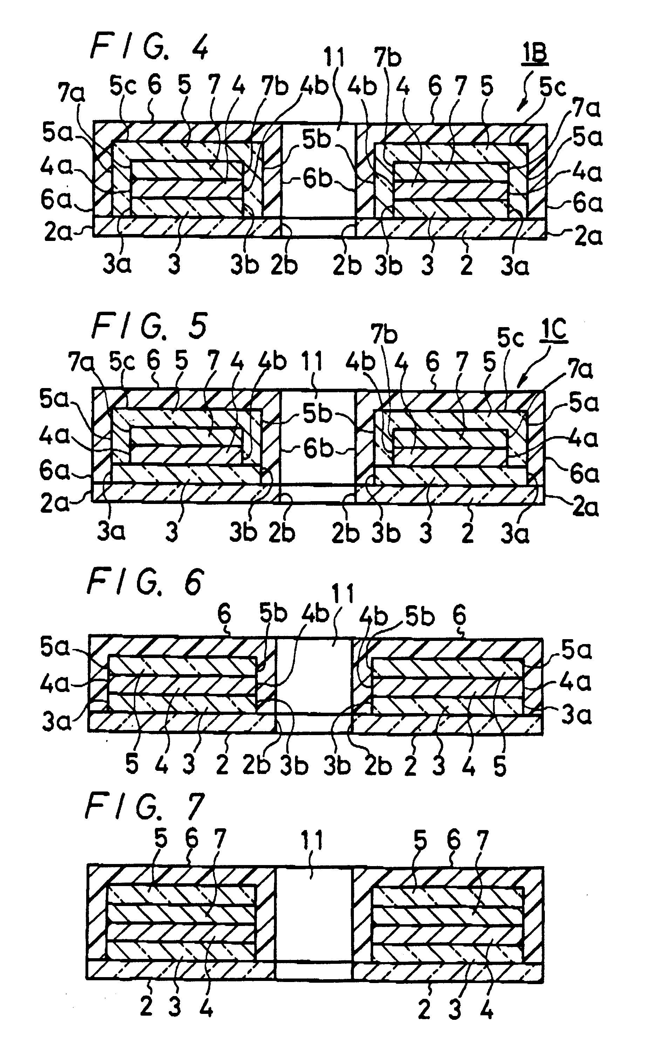

Referring now to Figure 4, in the third embodiment of optically recordable carrier 1B, a reflective film 7 is formed on the record layer 4. The reflective film 7 may be formed by vacuum evaporation, of, for example, aluminium, and is coextensive with the record layer 4 which, as in Figure 2, is coextensive with the first protective layer 3 so that the reflective film 7 is precisely superimposed upon the record layer 4. The second protective layer 5 is formed so as to cover the upper surface of the reflective film 7 and also the outer edges 3a, 4a and 7a and the inner edges 3b, 4b and 7b of the layers 3 and 4 and the reflective film 7, respectively.

In the carrier 1B, since the record layer 4 is sandwiched by the first protective layer 3 and the reflective film 7, the resistance to corrosion of the record layer 4 is further improved. In the case of the carrier 1B, the protective film 6 of organic material is formed so as to cover the upper surface 5c and the inner and outer edges 5b and 5a of the protective layer 5.

Referring now to Figure 5, in a fourth embodiment of optically recordable carrier 1c, the reflective film 7 is formed on the optical record layer 4 so as to be coextensive therewith, and the record layer 4 has its outer and inner edges 4a and 4b spaced from the corresponding edges 3a and 3b of the first protective layer 3, as in the embodiment of Figure 3.

In the embodiment of Figure 5, the second protective layer 5 may have its deposited thickness increased by an amount corresponding to the sum of the thickness of the record layer 4 and the reflective film 7 at its portions outside and inside the record layer 4. Such increased thickness is less, by the thickness of the first protective layer 3, than the increase in thickness of the second protective layer 5 required in the embodiment of Figure 4. Therefore, for the reason given in the comparison of the first and second embodiments shown in Figures 2 and 3, the fourth embodiment of Figure 5 is superior to the third embodiment of Figure 4 in corrosion resistance.

Corrosion tests were carried out on the optically recordable carriers 1, 1A, 1B and 1C, and the test results shown in the table below indicate that all of the embodiments are excellent in corrosion resistance, as compared with comparative examples 1 and 2 which will be described later with reference to Figures 6 and 7, respectively.

In each of the corrosion tests, the several layers and films were formed on a respective annular polycarbonate resin substrate with an outer diameter of 130 mm and an inner diameter of 15 mm. The radial distance between the inner edges 2b and 4b of the substrate 2 and the record layer 4, respectively, and the radial distance between the outer edges 2a and 4a of the substrate 2 and the record layer 4 were about 3 mm, respectively, the thickness of that portion of the protective layer 5 covering the inner and outer edges of the underlying layers was about 2 mm in the radial direction, and he thickness of the protective film 6 was about 1 mm.

In the comparative example 1 shown in Figure 6, a protective layer 3 of inorganic material with an outer diameter of about 127 mm and with an inner diameter of about 22 mm was formed on an annular-shaped substrate 2 with an outer diameter of 130 mm and with an inner diameter of 15 mm. The optical record layer 4 was formed on the first protective layer 3 or inorganic material so as to coincide with the latter in shape and in size, and the second protective layer 5 of inorganic material was superimposed on the record layer 4 so as to coincide therewith. Then, a protective film 6 of organic material covered the upper surface of the second protective layer 5 and the inner peripheral surfaces 3b, 4b and 5b and the outer peripheral surfaces 3a, 4a and 5a of the layers 3, 4 and 5, respectively.

The comparative example 2 shown in Figure 7 is generally similar to the comparative example 1, and further includes a reflective film 7 formed coextensively between the optical record layer 4 and the second protective layer 5 of inorganic material. It will be seen that, in the comparative examples 1 and 2, the protective layers 3 and 5 of inorganic material are not joined or fused together at their inner and outer peripheral edges and, therefore, do not envelope the optical record layer 4. It will be appreciated that, in each of the optically recordable carriers 1, 1A, 1B and 1C embodying the invention and in each of the comparative examples 1 and 2, the various layers and films are formed of the same materials as were mentioned for layers and films, respectively, identified by the same reference numerals in the description of the first embodiment shown in Figure 1.

In the corrosion tests, the various embodiments of the invention and the comparative examples formed as described above were left in the atmosphere at a temperature of 80°C and a humidity of 90% for 500 hours.

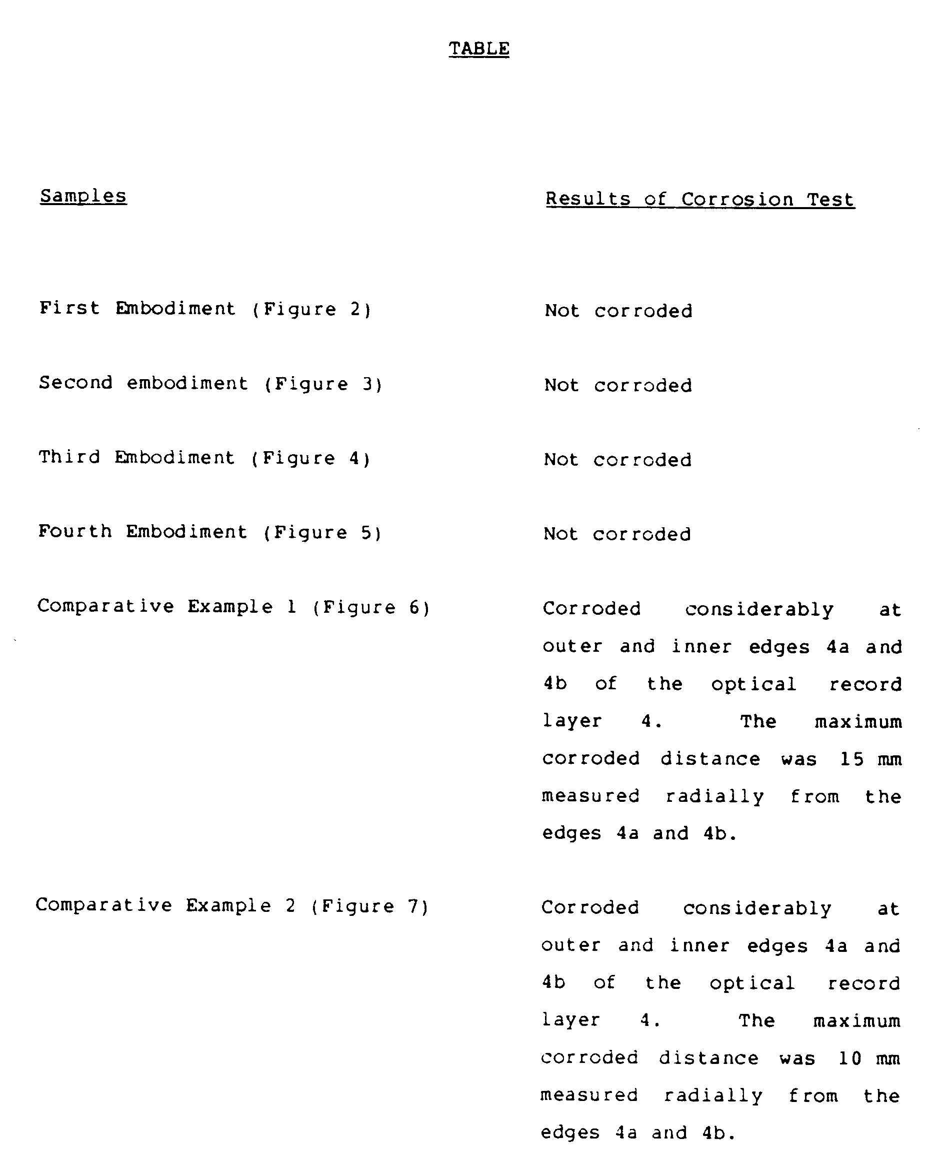

As will be clear from the table, the optically recordable carriers embodying the invention all exhibit excellent corrosion-resistance properties. Such excellent corrosion resistance is not realized if the protective layers 3 and 5 of inorganic material do not fully envelope the optical record layer 4; as in comparative examples 1 and 2. In such cases, the outer and inner edges 4a and 4b of the record layer 4 are only covered by the protective film 6 of organic material through which water vapour and oxygen can diffuse into contact with the record layer 4. If the record layer 4 is covered only by the protective layers 3 and 5 of inorganic material, the optically recordable carrier is fragile. Therefore, the protective film 6 of organic material is preferably provided. Accordingly, even if an optically recordable carrier embodying the invention is dropped on the floor, or otherwise subjected to impacts, the protective film 6 of organic material acts as a shock absorber to prevent the optically recordable carrier from being damaged.

## Claims

1. An optically recordable carrier (1) comprising:
a substrate (2), an optical record layer (4) on said substrate (2) and a protective film (3, 5) of inorganic material enveloping surfaces of the optical record layer (4), the optical record layer (4) and the substrate (2) being of annular shape and the protective film (3, 5) of inorganic material including a first protective layer (3) interposed between the substrate (2) and the optical record layer (4) and a second protective layer (5) formed so as to cover an upper surface (4c) and inner and outer peripheral edge surfaces (4b, 4a) of the optical record layer (4) and fused with the first protective layer (3), the second protective layer (5) being covered on its outer surface with a protective film (6) of organic material;
characterised in that
the first protective layer (3) is also of annular shape and has an inner diameter larger than that of the substrate (2) and an outer diameter smaller than that of the substrate (2);
the second protective layer (5) is formed so as to extend over and fuse with inner and outer edge surfaces (3b, 3a) of the first protective layer (3) in addition to covering the upper surface (4c) and inner and outer peripheral edge surfaces (4b, 4a) of said optical record layer (4); and
the second protective layer (5) is also of annular shape, has an inner diameter larger than that of the substrate (2) and an outer diameter smaller than that of the substrate (2), and the protective film (6) of organic material has inner and outer diameters the same as those of the substrate (2) and covers the second protective layer (5) on its upper surface (5c) and inner and outer peripheral surfaces (5b, 5a).

2. An optically recordable carrier according to claim 1, wherein the optical record layer (4) is coextensive with the first protective layer (3).

3. An optically recordable carrier (1) according to claim 1, wherein the inner diameter of the optical record layer (4) formed on the first protective layer (3) is larger than that of the first protective layer (3) and an outer diameter of the optical record layer (4) is smaller than that of the first protective layer (3).

4. An optically recordable carrier (1) according to claim 3, wherein the second protective layer (5) has inner and outer diameters which are the same as those of the first protective layer (3).

5. An optically recordable carrier (1) according to claim 1, wherein an annular-shaped reflective film (7) is interposed between the optical record layer (4) and the second protective layer (5).

6. An optically recordable carrier (1) according to claim 5, wherein the first protective layer (3), the optical record layer (4) and the reflective film (7) are coextensive with each other and have inner diameters which are larger than the inner diameter of the substrate (2), the first protective layer (3), the optical record layer (4) and the reflective film (7) have outer diameters which are smaller than the outer diameter of the substrate (2), and the second protective layer (5) covers the upper surface of the reflective film (7) and inner and outer peripheral edge portions (7b, 7a) of the reflective film (7), the optical record layer (4) and the first protective layer (3).

7. An optically recordable carrier (1) according to claim 5, wherein inner diameters of the optical record layer (4) and the reflective film (7) are larger than that of the first protective layer (3), outer diameters of the optical record layer (4) and the reflective film (7) are smaller than that of the first protective layer (3), and the second protective layer (5) covers an upper surface of the reflective film (7) and inner and outer peripheral edge surfaces (7b, 7a) of the reflective film (7) and the optical record layer (4).

8. An optically recordable carrier (1) according to claim 7, wherein inner and outer diameters of the second protective layer (5) are the same as those of the first protective layer (3), and the protective film (6) of organic material which covers the second protective layer (5) at its upper surface (5c) and inner and outer peripheral edge surfaces (5b, 5a) has inner and outer diameters the same as those of the substrate (2).

9. An optically recordable carrier (1) according to any one of the preceding claims, wherein the inorganic material of the protective film (3, 5) is a nitride.

10. An optically recordable carrier (1) according to claim 9, wherein said nitride is silicon nitride or aluminium nitride.

## Patentansprüche

1. Optisch beschreibbarer Träger (1), mit
einem Substrat (2), einer optischen Aufzeichnungsschicht (4) auf dem Substrat (2) und einem Schutzfilm (3, 5) aus anorganischen Material, der die Flächen der optischen Aufzeichnungsschicht (4) umhüllt, wobei die optische Aufzeichnungsschicht (4) und das Substrat (2) eine kreisringförmige Form aufweisen und der Schutzfilm (3, 5) aus anorganischem Material eine erste Schutzschicht (3) umfaßt, die zwischen dem Substrat (2) und der optischen Aufzeichnungsschicht (4) angeordnet ist, sowie eine zweite Schutzschicht (5), die so ausgebildet ist, daß sie eine obere Fläche (4c) und eine innere und äußere periphere Randfläche (4b, 4a) der optischen Aufzeichnungsschicht (4) überdeckt und mit der ersten Schutzschicht (3) verschmolzen ist, wobei die zweite Schutzschicht (5) auf ihrer äußeren Fläche mit einem Schutzfilm (6) aus organischem Material bedeckt ist;
**dadurch gekennzeichnet,** daß
die erste Schutzschicht (3) ebenfalls eine kreisringförmige Form aufweist und einen inneren Durchmesser hat, der größer als der des Substrats (2) ist und einen äußeren Durchmesser, der kleiner als der des Substrats (2) ist;
die zweite Schutzschicht (5) so ausgebildet ist, daß sie sich über der inneren und äußeren Fläche (3a, 3b) der ersten Schutzschicht (3) ausdehnt und mit ihr verschmilzt, um zusätzlich die obere Fläche (4c) und die innere und äußere periphere Randfläche (4b, 4a) der optischen Aufzeichnungsschicht (4) zu überdecken; und
die zweite Schutzschicht (5) ebenfalls eine kreisringförmige Form aufweist und einen inneren Durchmesser hat, der größer als der des Substrats (2) ist und einen äußeren Durchmesser, der kleiner als der des Substrats (2) ist, und der Schutzfilm (6) aus organischem Material einen inneren und äußeren Durchmesser hat, der jeweils gleich dem des Substrats (2) ist und die zweite Schutzschicht (5) auf ihrer oberen Fläche (5c) sowie die innere und äußere periphere Fläche (5b, 5a) abdeckt.

2. Optisch beschreibbarer Träger nach Anspruch 1, wobei die optische Aufzeichnungsschicht (4) ausdehnungsgleich mit der ersten Schutzschicht (3) ist.

3. Optisch beschreibbarer Träger (1) nach Anspruch 1, wobei der innere Durchmesser der optischen Aufzeichnungsschicht (4), die auf der ersten Schutzschicht (3) aufgebracht ist, größer ist als der der ersten Schutzschicht (3), und wobei der äußere Durchmesser der optischen Aufzeichnungschicht (4) kleiner ist als der der ersten Schutzschicht (3).

4. Optisch beschreibbarer Träger (1) nach Anspruch 3, wobei die zweite Schutzschicht (5) einen inneren und äußeren Durchmesser hat, der gleich dem der ersten Schutzschicht (3) ist.

5. Optisch beschreibbarer Träger (1) nach Anspruch 1, wobei der kreisringförmige, reflektierende Film (7) zwischen der optischen Aufzeichnungsschicht (4) und der zweiten Schutzschicht (5) angeordnet ist.

6. Optische beschreibbarer Träger (1) nach Anspruch 5, wobei die erste Schutzschicht (3), die optische Aufzeichnungsschicht (4) und der reflektierende Film (7) miteinander ausdehnungsgleich sind und einen inneren Durchmesser haben, der größer als der innere Durchmesser des Substrats (2) ist, wobei die erste Schutzschicht (3), die optische Aufzeichnungsschicht (4) und der reflektierende Film (7) einen äußeren Durchmesser haben, der kleiner als der äußere Durchmesser des Substrats (2) ist, und wobei die zweite Schutzschicht (5) die obere Fläche des reflektierenden Films (7) und den inneren und äußeren peripheren Endbereich (7a, 7b) des reflektierenden Films (7), die optische Aufzeichnungsschicht (4) und die erste Schutzschicht (3) überdeckt.

7. Optisch beschreibbarer Träger (1) nach Anspruch 5, wobei der innere Durchmesser der optischen Aufzeichnungsschicht (4) und der reflektierende Film (7) größer als der der ersten Schutzschicht (3) ist, wobei der äußere Durchmesser der optischen Aufzeichnungsschicht (4) und der reflektierende Film (7) kleiner als der der ersten Schutzschicht (3) ist und wobei die zweite Schutzschicht (5) eine obere Fläche des reflektierenden Films (7) und den inneren und äußeren peripheren Rand (7b, 7a) des reflektierenden Films (7) und der optischen Aufzeichnungsschicht (4) überdeckt.

8. Optisch beschreibbarer Träger (1) nach Anspruch 7, wobei der innere und äußere Durchmesser der zweiten Schutzschicht (5) gleich dem der ersten Schutzschicht (3) ist, und wobei der Schutzfilm aus Organischem Material, der die zweite Schutzschicht (5) an seiner oberen Fläche (5c) und an der inneren und äußeren Randfläche (5a, 5b) überdeckt, einen inneren und äußeren Durchmesser hat, der gleich dem des Substrats (2) ist.

9. Optisch beschreibbarer Träger (1) nach einen der vorhergehenden Ansprüche, wobei das anorganische Material des Schutzfilms (3, 5) Nitrid ist.

10. Optisch beschreibbarer Träger (1) nach Anspruch 9, wobei das Nitrid ein Siliziumnitrid oder Aluminiumnitrid ist.

## Revendications

1. Support enregistrable optiquement (1) comprenant :
un substrat (2), une couche d' enregistrement optique (4) située sur ledit substrat (2) et un film de protection (3, 5) réalisé en un matériau inorganique qui enveloppe des surfaces de la couche d'enregistrement optique (4), la couche d'enregistrement optique (4) et le substrat (2) présentant une conformation annulaire et le film de protection (3, 5) réalisé en un matériau inorganique incluant une première couche de protection (3) interposée entre le substrat (2) et la couche d'enregistrement optique (4) et une seconde couche de protection (5) formée de manière à recouvrir une surface supérieure (4c) et des surfaces de bord périphérique interne et externe (4b, 4a) de la couche d'enregistrement optique (4) et à être fondue avec la première couche de protection (3), la seconde couche de protection (5) étant recouverte sur sa surface externe par un film de protection (6) réalisé en un matériau organique ;
caractérisé en ce que :
la première couche de protection (3) présente également une conformation annulaire et présente un diamètre interne supérieur à celui du substrat (2) et un diamètre externe inférieur à celui du substrat (2) ;
la seconde couche de protection (5) est formée de manière à s'étendre au-dessus de surfaces de bord interne et externe (3b, 3a) de la première couche de protection (3) et à se fondre avec, en plus du fait qu'elle recouvre la surface supérieure (4c) et les surfaces de bord périphérique interne et externe (4b, 4a) de ladite couche d'enregistrement optique (4) ; et
la seconde couche de protection (5) présente également une conformation annulaire, présente un diamètre interne supérieur à celui du substrat (2) et un diamètre externe inférieur à celui du substrat (2) et le film de protection (6) réalisé en un matériau organique présente des diamètres interne et externe qui sont les mêmes que ceux du substrat (2) et il recouvre la seconde couche de protection (5) sur sa surface supérieure (5c) ainsi que sur des surfaces périphériques interne et externe (5b, 5a).

2. Support enregistrable optiquement selon la revendication 1, dans lequel la couche d'enregistrement optique (4) s'étend sur la même distance que la première couche de protection (3).

3. Support enregistrable optiquement (1) selon la revendication 1, dans lequel le diamètre interne de la couche d'enregistrement optique (4) formée sur la première couche de protection (3) est supérieur à celui de la première couche de protection (3) et le diamètre externe de la couche d'enregistrement optique (4) est inférieur à celui de la première couche de protection (3).

4. Support enregistrable optiquement (1) selon la revendication 3, dans lequel la seconde couche de protection (5) présente des diamètres interne et externe qui sont les mêmes que ceux de la première couche de protection (3).

5. Support enregistrable optiquement (1) selon la revendication 1, dans lequel un film réfléchissant de forme annulaire (7) est interposé entre la couche d'enregistrement optique (4) et la seconde couche de protection (5).

6. Support enregistrable optiquement (1) selon la revendication 5, dans lequel la première couche de protection (3), la couche d'enregistrement optique (4) et le film réfléchissant (7) s'étendent sur la même distance les uns par rapport aux autres et présentent des diamètres internes qui sont supérieurs au diamètre interne du substrat (2), la première couche de protection (3), la couche d'enregistrement optique (4) et le film réfléchissant (7) présentent des diamètres externes qui sont inférieurs au diamètre externe du substrat (2) et la seconde couche de protection (5) recouvre la surface supérieure du film réfléchissant (7) ainsi que des parties de bord périphérique interne et externe (7b, 7a) du film réfléchissant (7), la couche d'enregistrement optique (4) et la première couche de protection (3).

7. Support enregistrable optiquement (1) selon la revendication 5, dans lequel les diamètres internes de la couche d'enregistrement optique (4) et du film réfléchissant (7) sont supérieurs à celui de la première couche de protection (3), les diamètres externes de la couche d'enregistrement optique (4) et du film réfléchissant (7) sont inférieurs à celui de la première couche de protection (3) et la seconde couche de protection (5) recouvre une surface supérieure du film réfléchissant (7) ainsi que des surfaces de bord périphérique interne et externe (7b, 7a) du film réfléchissant (7) et que la couche d'enregistrement optique (4).

8. Support enregistrable optiquement (1) selon la revendication 7, dans lequel les diamètres interne et externe de la seconde couche de protection (5) sont les mêmes que ceux de la première couche de protection (3) et le film de protection (6) réalisé en un matériau organique qui recouvre la seconde couche de protection (5) au niveau de sa surface supérieure (5c) et des surfaces de bord périphérique interne et externe (5b, 5a) présente des diamètres interne et externe qui sont les mêmes que ceux du substrat (2).

9. Support enregistrable optiquement (1) selon l'une quelconque des revendications précédentes, dams lequel le matériau inorganique du film de protection (3, 5) est un nitrure.

10. Support enregistrable optiquement (1) selon la revendication 9, dans lequel ledit nitrure est du nitrure de silicium ou du nitrure d'aluminium.
